(19) Europäisches Patentamt
European Patent Office
Office européen des brevets

(11) **EP 4 708 021 A1**

(12) **EUROPEAN PATENT APPLICATION**
published in accordance with Art. 153(4) EPC

(43) Date of publication:
**11.03.2026 Bulletin 2026/11**

(21) Application number: **24879898.5**

(22) Date of filing: **25.07.2024**

(51) International Patent Classification (IPC):
*G06F 3/14* (2006.01)   *G06F 3/01* (2006.01)
*G06F 3/041* (2006.01)   *G06F 9/451* (2018.01)
*H04W 4/80* (2018.01)

(52) Cooperative Patent Classification (CPC):
**G06F 3/01; G06F 3/041; G06F 3/14; G06F 9/451;
H04W 4/80**

(86) International application number:
**PCT/KR2024/010843**

(87) International publication number:
**WO 2025/084558 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.10.2023 KR 20230139480**

(71) Applicant: Samsung Electronics Co., Ltd.
**Suwon-si, Gyeonggi-do 16677 (KR)**

(72) Inventors:
• **SOH, Byungseok**
Suwon-si, Gyeonggi-do 16677 (KR)
• **CHO, Seungki**
Suwon-si, Gyeonggi-do 16677 (KR)
• **JANG, Yongseok**
Suwon-si, Gyeonggi-do 16677 (KR)
• **SEONG, Kibum**
Suwon-si, Gyeonggi-do 16677 (KR)

(74) Representative: **Appleyard Lees IP LLP**
**15 Clare Road**
**Halifax HX1 2HY (GB)**

(54) **ELECTRONIC DEVICE AND CONTROL METHOD THEREOF**

(57)   An electronic apparatus including a mirror display; a sensor; and at least one processor configured to identify a user command for selecting an area of the mirror display, acquire user gaze information through the sensor, identify an object in a predetermined space and reflected in the selected area of the mirror display based on the acquired user gaze information, identify a graphic user interface (GUI) to be displayed on the mirror display based on information on the identified object, identify a position on the mirror display to display the identified GUI based on the user gaze information, and control the mirror display to display the identified GUI on the identified position.

## FIG. 5

# Description

[Technical Field]

The present disclosure relates to an electronic apparatus and a control method thereof, and more particularly, to an electronic apparatus including a mirror display and a control method thereof.

[Background Art]

Various types of electronic devices have been developed and supplied in accordance with the development of electronic technology. In particular, display apparatuses used in various places such as homes, offices, public places, and the like, have been continuously developed over the recent years.

For example, the display apparatus may provide various types of services through a mirror display that provides both a mirror function and a display function. For example, the mirror display may function a mirror by using its reflectance in case that no image is displayed on the display.

[Disclosure]

[Technical Solution]

Aspects of embodiments of the disclosure will be set forth in part in the description which follows and, in part, will be apparent from the description, or may be learned by practice of the presented embodiments.

According to an embodiment of the disclosure, an electronic apparatus includes a mirror display; a sensor; and at least one processor configured to identify a user command for selecting an area of the mirror display, acquire user gaze information through the sensor, identify an object in a predetermined space and reflected in the selected area of the mirror display based on the acquired user gaze information, identify a graphic user interface (GUI) to be displayed on the mirror display based on information on the identified object, identify a position on the mirror display to display the identified GUI based on the user gaze information, and control the mirror display to display the identified GUI on the identified position.

According to an embodiment of the disclosure, the at least one processor may be configured to identify the user command for selecting the area of the mirror display based on at least one of the user gaze information, a user gesture input, or a user touch input.

According to an embodiment of the disclosure, the at least one processor may be configured to identify the position on the mirror display to display the identified GUI based on the user gaze information and an actual position of the identified object in the predetermined space.

According to an embodiment of the disclosure, the apparatus may further include a communication interface. The at least one processor may be configured to identify a direction of the identified object on a basis of the mirror display based on the user gaze information, and identify the actual position of the identified object in the predetermined space by transmitting an ultra-wideband (UWB) signal through the communication interface based on the identified direction of the identified object.

According to an embodiment of the disclosure, the at least one processor may be configured to acquire the information on the identified object by communicating with at least one of the identified object or an external server, and store the acquired information on the identified object and an actual position of the identified object in the predetermined space in a memory.

According to an embodiment of the disclosure, the at least one processor may be configured to control the mirror to display the identified GUI related to a function of the identified object based on the information on the identified object, and control an operation of the identified object based on a user manipulation on the displayed identified GUI.

According to an embodiment of the disclosure, the apparatus may further include a communication interface. The at least one processor may be configured to communicate with an external apparatus through the communication interface and acquire information on the external apparatus when the external apparatus is close to the mirror display within a critical distance, and control the mirror display to display at least one of a control menu or state information, corresponding to the external apparatus, based on the acquired information on the external apparatus.

According to an embodiment of the disclosure, the at least one processor may be configured to transmit a control signal corresponding to the user command to the external apparatus through the communication interface based on a user command received through the control menu.

According to an embodiment of the disclosure, the acquired information on the external apparatus may include information on an application already executed in the external apparatus. The at least one processor may be configured to display an application execution screen on the mirror display based on the information on the application.

According to an embodiment of the disclosure, the at least one processor may be configured to control the mirror display to display the control menu corresponding to the external apparatus when the external apparatus is identified as having no display based on the information on the external apparatus.

According to an embodiment of the disclosure, provided is a method of controlling an electronic apparatus including a mirror display and a sensor, the method including identifying a user command for selecting an area of the mirror display; acquiring user gaze information through the sensor; identifying an object in a predetermined space and reflected in the selected area of the mirror display based on the acquired user gaze information; identifying a graphic user interface (GUI) to be displayed on the mirror display based on information on the identified object; identifying a position on the mirror display to display the identified GUI based on the user gaze information; and controlling the mirror display to display the identified GUI on the identified position.

According to an embodiment of the disclosure, the identifying the the user command for selecting the area of the mirror display may be based on at least one of the user gaze information, a user gesture input, or a user touch input.

According to an embodiment of the disclosure, the position on the mirror display to display the identified GUI may be identified based on the user gaze information and an actual position of the identified object in the predetermined space.

According to an embodiment of the disclosure, the identifying the position on the mirror display to display the identified GUI may include identifying a direction of the identified object on a basis of the mirror display based on the user gaze information, and identifying the actual position of the identified object in the predetermined space by transmitting an ultra-wideband (UWB) signal based on the identified direction of the identified object.

According to an embodiment of the disclosure, provided is a non-transitory computer-readable medium which stores a computer instruction for causing an electronic apparatus including a mirror display and a sensor to perform an operation when executed by a processor of the electronic apparatus, wherein the operation includes identifying a user command for selecting an area of the mirror display; acquiring user gaze information through the sensor; identifying an object in a predetermined space and reflected in the selected area of the mirror display based on the acquired user gaze information; identifying a graphic user interface (GUI) to be displayed on the mirror display based on information on the identified object; identifying a position on the mirror display to display the identified GUI based on the user gaze information; and controlling the mirror display to display the identified GUI on the identified position.

[Description of Drawings]

Aspects, features, and advantages of embodiments of the present disclosure will become clearer through the following descriptions of embodiments provided with reference to the accompanying drawings.

FIG. 1 is a diagram for explaining use of a mirror display according to one or more embodiments.
FIG. 2 is a block diagram showing a configuration of an electronic apparatus according to an embodiment.
FIGS. 3A and 3B are diagrams for explaining a mirror display structure according to one or more embodiments.

FIG. 4 is a block diagram specifically showing a configuration of an electronic apparatus according to one or more embodiments.
FIG. 5 is a diagram for explaining a control method of an electronic apparatus according to one or more embodiments.
FIGS. 6A and 6B are diagrams for explaining examples of graphic user interface (GUI) information provided to the mirror display according to one or more embodiments.
FIGS. 7, 8A, 8B, and 9 are diagrams for explaining a method of identifying a GUI display position according to one or more embodiments.
FIG. 10 is a flowchart for explaining a control method of an electronic apparatus according to one or more embodiments.
FIGS. 11A and 11B are diagrams for explaining a method of acquiring information on an object by using an external server according to one or more embodiments.
FIG. 12 is a flowchart for explaining a control method of an electronic apparatus according to one or more embodiments.
FIGS. 13 and 14 are diagrams for explaining a method of providing information on an external apparatus close to the mirror display according to one or more embodiments.

[Best Mode]

Terms used in the specification are briefly described, and the present disclosure is then described in detail.

Terms used in embodiments of the present disclosure are currently widely used general terms that are selected as much as possible in consideration of their functions in the present disclosure, and may be changed based on the intentions of those skilled in the art, cases in the art, the emergence of a new technique, or the like. In addition, in a specific case, terms arbitrarily chosen by an applicant may exist. In this case, the meanings of such terms are mentioned in detail in corresponding description portions of the present disclosure. Therefore, the terms used in the present disclosure need to be defined on the basis of the meanings of the terms and the contents throughout the present disclosure rather than simple names of the terms.

In this specification, an expression "have", "may have", "include", "may include", or the like, indicates the existence of a corresponding feature (for example, a numerical value, a function, an operation or a component such as a part), and does not exclude the existence of an additional feature.

In the present disclosure, an expression "A or B", "at least one of A and/or B", "one or more of A and/or B", or the like, may include all possible combinations of items enumerated together. For example, "A or B", "at least one of A and B" or "at least one of A or B" may indicate all of 1) a case of including only A, 2) a case of including only B, or 3) a case of including both of A and B.

Expressions "first", "second", or the like, used in the specification may indicate various components regardless of the sequence and/or importance of the components. These expressions are used only to distinguish one component from the other components, and do not limit the corresponding components.

In case that any component (for example, a first component) is mentioned to be "(operatively or communicatively) coupled with/to" or "connected to" another component (for example, a second component), it is to be understood that any component may be directly coupled to another component or may be coupled to another component through still another component (for example, a third component).

An expression "configured (or set) to" used in the present disclosure may be replaced by an expression "suitable for", "having the capacity to", "designed to", "adapted to", "made to" or "capable of" based on a situation. The expression "configured (or set) to" may not necessarily indicate "specifically designed to" in hardware.

Instead, an expression "an apparatus configured to" in any situation may indicate that the apparatus may "perform~" together with another apparatus or component. For example, "a processor configured (or set) to perform A, B and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

It is to be understood that a term "include", "configured to", or the like used in this application specifies the existence of features, numerals, steps, operations, components, parts, or combinations thereof, which is mentioned in the specification, and does not preclude the existence or addition of one or more other features, numerals, steps, operations, components, parts, or combinations thereof.

In the embodiments, a "module" or a "~er/or" may perform at least one function or operation, and be implemented in hardware or software, or be implemented by a combination of hardware and software. In addition, a plurality of "modules" or a plurality of "~ers/~ors" may be integrated in at least one module to be implemented by at least one processor (not shown) except for a "module" or a "~er/or" that needs to be implemented by specific hardware.

Meanwhile, the drawings schematically show various elements and regions. Therefore, the spirit of the present disclosure is not limited by relative sizes or intervals shown in the accompanying drawings.

Hereinafter, an embodiment of the present disclosure is described in detail with reference to the accompanying drawings.

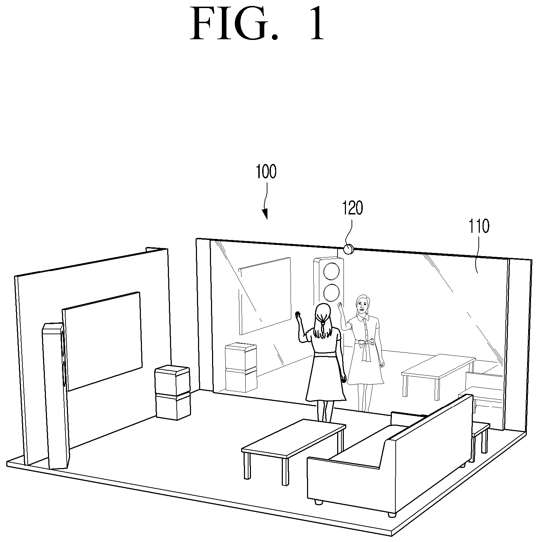

FIG. 1 is a diagram for explaining use of a mirror display according to one or more embodiments.

An electronic apparatus 100 according to an embodiment may be implemented as various types of mirror display apparatuses installed in various places where a mirror is needed, and capable of transmitting information while providing a mirror function. Here, a "mirror display" is a compound word of a "mirror" indicating the mirror, and a "display" indicating a task of visually expressing the information. This mirror display may require an ability to provide at least one of the mirror function or a display function in a timely manner based on a user need. As an example, a mirror display 110 disposed in the electronic apparatus 100 may be operated in a display state (or display mode) for providing the display function and a mirror state (or mirror mode) for providing the mirror function. For example, the mirror display 110 may be operated in the mirror state in a low power state or in a turn-off state.

For example, referring to FIG. 1, the mirror display 110 may be installed in a predetermined space, for example, on one wall of a living room at home, and the mirror display 110 may reflect various objects disposed in the space, for example, home appliances.

Hereinafter, the description describes various embodiments in which a state of the object reflected on the mirror display 110 may be checked or a function of the object is controlled using the mirror display 110.

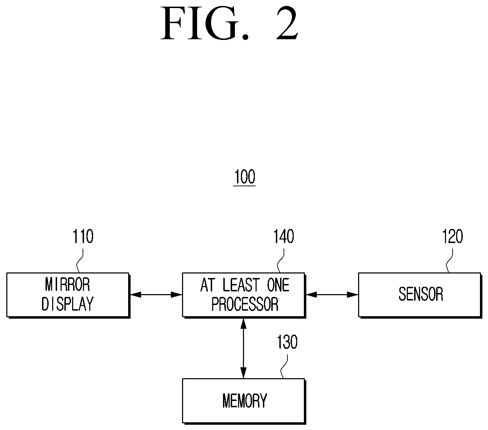

FIG. 2 is a block diagram showing a configuration of the electronic apparatus according to one or more embodiments.

Referring to FIG. 2, the electronic apparatus 100 may include the mirror display 110, a sensor 120, a memory 130, and at least one processor 140. As an example, the electronic apparatus 100 may be implemented as a switchable mirror apparatus providing the mirror function and the display function.

The electronic apparatus 100 may be implemented as various apparatuses having the display function, such as a window display, a vehicle display (or vehicle window), a monitor, a smart monitor, a smart television (TV), an electronic picture frame, an electronic blackboard, an electronic table, a laptop computer, a digital signage, a digital information display (DID), and a video wall.

The mirror display 110 may be implemented as a display including a self-light emitting element or a display including a non self-light emitting element and a backlight. For example, the mirror display 110 may be implemented in various types of displays such as a liquid crystal display (LCD), an organic light emitting diode (OLED) display, a light emitting diode (LED) display, a micro light emitting diode (micro LED) display, a mini LED display, a plasma display panel (PDP), a quantum dot (QD) display, and a quantum dot light-emitting diode (QLED) display. The mirror display 110 may also include a driving circuit, a backlight unit, and the like therein, which may be implemented in a form such as an a-si thin film transistor (TFT), a low temperature poly silicon (LTPS) TFT, or an organic TFT (OTFT). As an example, a touch sensor having a form of a touch film, a touch sheet, a touch pad, or the like and detecting a touch operation may be implemented to be disposed on a front surface of the mirror display 110 and detect various types of touch inputs. For example, the mirror display 110 may detect the various types of touch inputs, such as a touch input by a user hand, a touch input by an input apparatus such as a stylus pen, and a touch input by a specific electrostatic material. Here, the input apparatus may be implemented as a pen-type input apparatus that may be referred to by various terms such as an electronic pen, a stylus pen, and an S-pen. As an example, the mirror display 110 may be implemented as a flat display, a curved display, a foldable and/or rollable flexible display, or the like.

Meanwhile, the mirror display 110 may be implemented as a display providing the mirror function and/or display function.

For example, the mirror display 110 may be implemented by adding the switchable mirror to a general display panel.

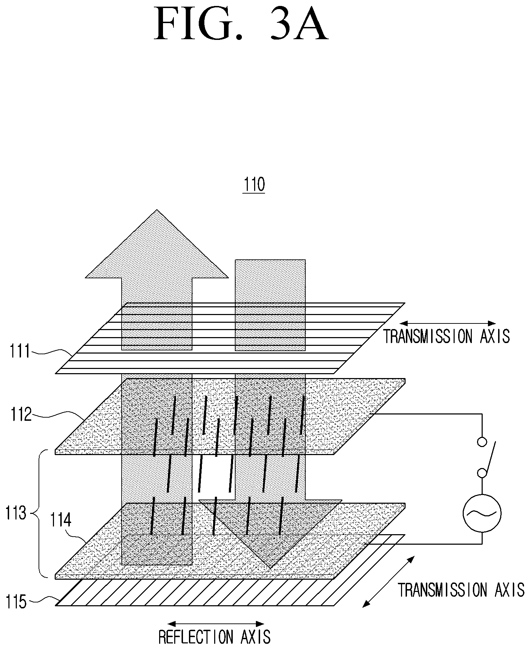

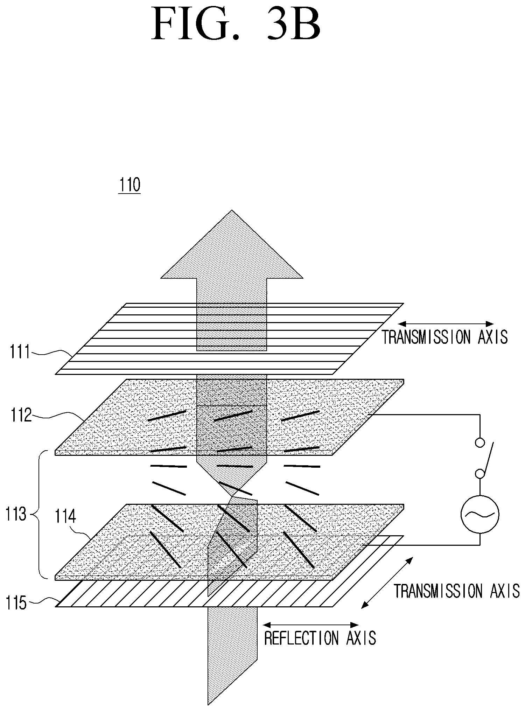

As shown in FIGS. 3A and 3B, the mirror display 110 may be implemented to include a polarizer 111, an upper glass 112, a lower glass 114, and a reflective polarizer 115. As an example, a liquid crystal (LC) layer 113 may be formed between the upper glass 112 and the lower glass 114. A liquid crystal (LC) may be in an intermediate state between liquid and crystal states, and have a structure in which rod-shaped molecules (or liquid crystal molecules) are aligned in one direction, similar to a solid crystal.

As an example, the polarizer 111 may be implemented to transmit polarized light. As an example, each of the upper glass 112 and the lower glass 114 may be implemented as transparent conductive oxide (TCO) glass, and is not limited thereto.

FIG. 3A shows the mirror display 110 when a voltage is turned off. When the voltage is turned off, the liquid crystal molecules may maintain a vertical state, and the incident polarized light may directly pass through the liquid crystal (LC) layer 113 as it is to be reflected to a reflection axis of the reflective polarizer 115. Accordingly, the mirror display 110 may be operated in the mirror state.

FIG. 3B shows the mirror display 110 when the voltage is turned on. When the voltage is turned on, the liquid crystal molecules may collapse and maintain a twisted state, and the incident polarized light may be rotated by 90 degrees and pass through the reflection axis of the reflective polarizer 115. Accordingly, the mirror display 110 may be operated in the display state. In addition, based on an implementation example, the mirror display 110 may further include a protective film serving to protect the polarizer, a film serving to classify lights in the polarizer, or the like.

The sensor 120 may sense the presence or absence of a user in front of the electronic apparatus 100, a distance to the user, an approach speed of the user, a current position of the user, a direction (or angle) in which the user is positioned, a change in the user position within a predetermined time range, an action of the user, etc. In this case, the sensor 120 may be implemented as various types of sensors capable of sensing the user. For example, the sensor 120 may include at least one of a time of flight (ToF) sensor, an ultrasonic sensor, a radio detection and ranging (RADAR) sensor, a photo diode sensor, a proximity sensor, a passive infrared (PIR) sensor, a pinhole sensor, a pinhole camera, an infrared human body detection sensor, a complementary metal-oxide-semiconductor (CMOS) image sensor, a heat detection sensor, a light sensor, or a motion detection sensor. For example, in case of being implemented as the infrared human body detection sensor (for example, an infrared ray (IR) time-of-flight (ToF) sensor), the sensor 120 may sense the user presence or absence, the user approach speed, the current user position, the position change, or the like based on a time in which an emitted infrared ray is reflected and received.

In addition, the sensor 120 may include at least one of a camera, a microphone, a carbon dioxide ($CO_2$) sensor, or an atmospheric pressure sensor. The microphone is a component for receiving a user voice or another sound and converting the same to the audio data. The $CO_2$ sensor is the sensor measuring carbon dioxide concentration. The atmospheric pressure sensor is a sensor sensing a surrounding pressure.

In addition, the sensor 120 may further include at least one sensor capable of sensing an ambient illuminance, an ambient temperature, an incident direction of light, etc. In this case, the sensor 120 may be implemented as an illuminance sensor, a temperature detection sensor, a light quantity sensing layer, the camera, or the like. For example, the illuminance sensor may be disposed inside a glass disposed in the mirror display 110. In this case, a sensing function of the sensor may be controlled to be operated normally even inside the glass through an algorithm that compensates for transmittance/reflectance of the glass disposed in the mirror display 110.

In addition, the sensor 120 may further include at least one of an acceleration sensor (or a gravity sensor), a geomagnetic sensor, or a gyro sensor. For example, the acceleration sensor may be a 3-axis acceleration sensor. The 3-axis acceleration sensor may measure gravitational acceleration for each axis, and provide raw data to the processor 140. The geomagnetic sensor or the gyro sensor may be used to acquire posture information. Here, the posture information may include at least one of roll information, pitch information, or yaw information.

The memory 130 may store data necessary for the various embodiments. The memory 130 may be implemented in the form of a memory embedded in an electronic apparatus 100, or in the form of a memory detachable from the electronic apparatus 100, based on a data storage purpose. For example, data for driving the electronic apparatus 100 may be stored in the memory embedded in the electronic apparatus 100, and data for an extension function of the electronic apparatus 100 may be stored in the memory detachable from the electronic apparatus 100. Meanwhile, the memory embedded in the electronic apparatus 100 may be implemented as at least one of a volatile memory (for example, a dynamic random access memory (DRAM), a static RAM (SRAM), or a synchronous dynamic RAM (SDRAM)), or a non-volatile memory (for example, an one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash or a NOR flash), a hard drive, or a solid state drive (SSD)). In addition, the memory detachable from the electronic apparatus 100 may be implemented in the form of a memory card (for example, a compact flash (CF), a secure digital (SD), a micro secure digital (Micro-SD), a mini secure digital (Mini-SD), an extreme digital (xD), or a multi-media card (MMC)), or an external memory which may be connected to a USB port (for example, a USB memory).

As an example, the memory 130 may store at least one instruction for controlling the electronic apparatus 100 or a computer program including the instructions.

As another example, the memory 130 may store an input image, that is, an image received from an external apparatus (for example, a source apparatus), an external storage medium (for example, the USB), an external server (for example, a web hard), or the like. Alternatively, the memory 130 may store an image acquired through the camera disposed at the electronic apparatus 100.

As still another example, the memory 130 may store information, algorithms, image quality parameters, or the like for performing at least one of various information required for an image quality processing, for example, noise reduction, detail enhancement, tone mapping, contrast enhancement, color enhancement, or frame rate conversion.

According to an embodiment, the memory 130 may be implemented as a single memory for storing data generated in various operations according to the present disclosure. However, according to another embodiment, the memory 130 may be implemented to include a plurality of memories respectively storing different types of data or respectively storing data generated in different steps.

The memory 130 may store the transmission feature information and reflection feature information of the mirror display 110.

Here, the transmission feature information of the mirror display 110 may include information on a luminance value based on a gray level of an image signal determined based on transmittance of the mirror display 110. For example, luminance feature information of the mirror display 110 may be the luminance measurement value based on the gray level of the image signal. That is, the mirror display 110 may have fixed transmittance. Accordingly, in case of inputting the image signal for each gray level, the luminance value may be acquired based on the gray level of the image signal. That is, an image signal of a zero institute of radio engineers (IRE) (or a black color) to 100 IRE (or a white color) (for example, a gray level image of zero to 255 for an 8-bit image) may be input, and the luminance measurement value based on the gray level of the input image signal may then be calculated and stored in the memory 130. The luminance measurement value based on the gray level of the image signal may also be referred to as a gamma table (or gamma curve). The luminance measurement value may be calculated by being directly measured through an experiment, and also be calculated by being predicted based on the transmittance of the mirror display 110.

Meanwhile, the reflection feature information of the mirror display 110 may include at least one of reflectance information of the mirror display 110 or reflection luminance of the mirror display 110 based on an external light amount. For example, the reflection feature information may be the reflectance itself of the mirror display 110. In this case, the reflection luminance based on the external light amount according to an embodiment of the present disclosure may be calculated based on the external light amount and reflectance, measured by the sensor 120. As another example, the reflection feature information may be information in the form of pre-measured or pre-calculated reflection luminance of the mirror display 110, based on the external light amount. Here, the reflection luminance of the mirror display 110 may be the luminance value generated as external light is reflected based on the reflectance of the mirror display 110.

However, the luminance feature information and reflection feature information of the mirror display 110 may also be received from the external server, or the like. For example, the luminance feature information corresponding to identification information (for example, manufacturing number or model) of the mirror display 110 may be stored in the external server. In this case, the electronic apparatus 100 may receive the information from the external server.

At least one processor 140 may control overall operations of the electronic apparatus 100. In detail, at least one processor 140 may be connected to each component of the electronic apparatus 100 to thus control the overall operations of the electronic apparatus 100. For example, at least one processor 140 may be electrically connected to the mirror display 110 and the memory 130, and control the overall operations of the electronic apparatus 100. At least one processor 140 may be one or more processors.

At least one processor 140 may perform the operation of the electronic apparatus 100 according to the various embodiments by executing at least one instruction stored in the memory 130.

At least one processor 140 may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. At least one processor 140 may control one of other components of the electronic apparatus or any combination thereof, and perform an operation related to communication or data processing. At least one processor 140 may execute at least one program or instruction stored in the memory. For example, at least one processor may perform a method according to one or more embodiments of the present disclosure by executing at least one instruction stored in the memory.

The plurality of operations may be performed by one processor or may be performed by the plurality of processors in case that the method according to one or more embodiments of the present disclosure includes the plurality of operations. For example, a first operation, a second operation, and a third operation may be performed by the method according to one or more embodiments. In this case, the first operation, the second operation, and the third operation may all be performed by a first processor. Alternatively, the first operation and the second operation may be performed by the first processor (for example, a general-purpose processor), and the third operation may be performed by a second processor (for example, an artificial intelligence-only processor).

At least one processor 140 may be implemented as a single-core processor including a single core, or may be implemented as at least one multi-core processor including multi cores (for example, homogeneous multi cores or heterogeneous multi cores). In case that at least one processor 140 is implemented as the multi-core processor, each of the multi cores included in the multi-core processor may include a processor internal memory such as a cache memory or an on-chip memory, and a common cache shared by the multi cores may be included in the multi-core processor. In addition, each (or some) of the multi cores included in the multi-core processor may independently read and perform a program instruction for implementing the method according to one or more embodiments of the present disclosure, or all (or some) of the multi cores may be linked with each other to read and perform the program instruction for implementing the method according to one or more embodiments of the present disclosure.

In case that the method according to one or more embodiments of the present disclosure includes the plurality of operations, the plurality of operations may be performed by one core among the multi cores included in the multi-core processor, or may be performed by the multi cores. For example, a first operation, a second operation, and a third operation may be performed by the method according to one or more embodiments. In this case, the first operation, the second operation, and the third operation may all be performed by a first core included in the multi-core processor. Alternatively, the first operation and the second operation may be performed by the first core included in the multi-core processor, and the third operation may be performed by a second core included in the multi-core processor.

In the embodiments of the present disclosure, the processor may indicate a system-on-chip (SoC) in which at least one processor and other electronic components are integrated, the single-core processor, the multi-core processor, or the core included in the single-core processor or the multi-core processor. Here, the core may be implemented as the CPU, the GPU, the APU, the MIC, the DSP, the NPU, the hardware accelerator, the machine learning accelerator, or the like. However, the embodiments of the present disclosure are not limited thereto. Hereinafter, for convenience of explanation, at least one processor 140 is referred to as the processor 140.

According to an embodiment, the processor 140 may identify an object disposed in the predetermined space based on user gaze information acquired through the sensor 120 in case of identifying a predetermined event while the mirror display 110 is in the mirror state. For example, the mirror display 110 may be operated in the mirror state in the low power state or the turn-off state. For example, the predetermined event may be a user command for selecting one area of the mirror display 110. For example, the processor 140 may identify the user command for selecting one area of the mirror display 110 based on at least one of the user gaze information, a user gesture input, a user touch input, or proximity communication from an external device. In addition, the processor 140 may identify the user command for selecting one area of the mirror display 110 based on a user hovering input, a user voice input, or the like.

For example, the processor 140 may detect a user face position from a captured image acquired through the camera, and identify user eyes on a user face to thus acquire the user gaze information. The processor 140 may use various conventional methods as a face area detection method. In detail, the processor 140 may use a direct recognition method and a method of using statistics. In the direct recognition method, a regulation may be set using a physical feature such as the outline or skin color of a facial image, a size of its component, or a distance between the components, and comparison, inspection, and measurement may be performed based on the regulation. In the method of using the statistics, the face area may be detected based on a pre-learned algorithm. That is, the method of using the statistics may be a method of converting unique features included in the input facial image into data and analyzing and comparing the data with a large database (of face and other object shapes). In particular, the processor 140 may detect the face area based on the pre-learned algorithm by using methods such as multi layer perceptron (MLP) and support vector machine (SVM). The processor 140 may identify a user eye area in a similar way.

The processor 140 may identify information on a graphic user interface (GUI) to be displayed on the mirror display 110 based on information on the identified object. For example, the processor 140 may identify the GUI that includes information such as state information, function information, or control menu to be displayed on the mirror display 110 based on the information of the identified device such as its type, model, or function.

The processor 140 may control the mirror display 110 to display the GUI on an identified position based on the user gaze information.

As an example, the processor 140 may identify one position of the mirror display 110 based on the user gaze information and an actual object position in the predetermined space, and display the GUI on the identified position. For example, the processor 140 may identify a virtual object position based on an actual device position, and identify the position to display the GUI based on the virtual device position and the user face position. The description describes its details below with reference to the drawings.

As an example, the processor 140 may acquire information on the object by communicating with at least one of the object or the external server, and store the information on the object and the actual object position in the predetermined space in the memory 130. For example, the processor 140 may acquire the information on the object through near field communication (NFC) with the object, or acquire the information on the object from a server that manages the object. In this case, the processor 140 may map the acquired information on the object and the actual object position, and register the same in the memory 130.

As an example, the processor 140 may display the GUI related to the function of the object based on the information on the identified object, and control an operation of the object based on a user manipulation on the displayed GUI. For example, the processor 140 may transmit a control signal for controlling the operation of the object to the object or the external server that manages the object. For example, the object may be a refrigerator. In this case, the processor 140 may display a control menu for controlling a temperature of the refrigerator based on information on the refrigerator, and transmit a control signal for controlling the temperature of the refrigerator to the refrigerator or an external server that manages the refrigerator in case of receiving a user command for controlling the temperature of the refrigerator through the control menu.

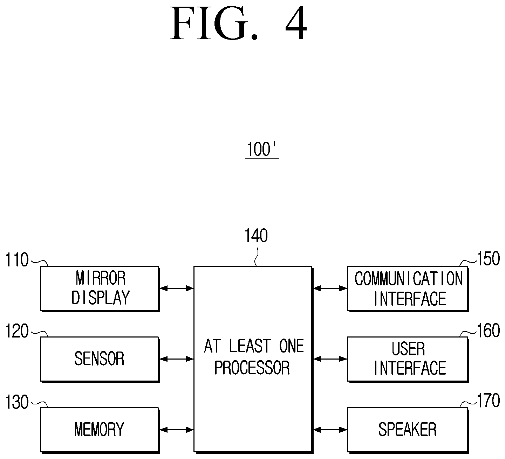

FIG. 4 is a block diagram specifically showing a configuration of an electronic apparatus according to one or more embodiments.

Referring to FIG. 4, an electronic apparatus 100' may include the mirror display 110, the sensor 120, the memory 130, at least one processor 140, a communication interface 150, a user interface 160, and a speaker 170. The description omits a detailed description of components overlapping the components shown in FIG. 2 among the components shown in FIG. 4.

The communication interface 150 may be implemented as various interfaces based on an implementation example of the electronic apparatus 100'. For example, the communication interface 150 may communicate with the external apparatus, the external storage medium (e.g., USB memory), the external server (e.g., web hard), or the like by using a communication method such as a Bluetooth, an access point (AP) based wireless fidelity (Wi-Fi, i.e., wireless local area network (LAN)), a Zigbee, a wired/wireless local area network (LAN), a wide area network (WAN), Ethernet, an IEEE 1394, a high-definition multimedia interface (HDMI), a universal serial bus (USB), a mobile high-definition link (MHL), an audio engineering society/European broadcasting union (AES/EBU) communication, an optical communication, or a coaxial communication. As an example, the communication interface 150 may perform communication with another electronic apparatus, the external server and/or a remote control apparatus, or the like.

The user interface 160 may be implemented as an apparatus such as a button, a touch pad, a mouse, or a keyboard, or may be implemented as a touch screen or the like which may also perform a manipulation input function in addition to the above-described display function.

The speaker 170 may be a component outputting not only various audio data but also various notification sounds, voice messages, or the like. The processor 140 may control the speaker 170 to output feedbacks or various notifications in audio forms according to the various embodiments of the present disclosure.

According to an embodiment, the processor 140 may identify an object direction on the basis of the mirror display 110 based on the user gaze information. The processor 140 may acquire information on the actual object position in the predetermined space by transmitting an ultra-wideband (UWB) signal through the communication interface 150 based on the identified object direction. The processor 140 may identify the position of the mirror display 110 to display the GUI related to the object, based on the user gaze information and the actual object position.

According to an embodiment, the processor 140 may communicate with the external apparatus and acquire information on the external apparatus in case that the external apparatus is close to the mirror display 110 within a critical distance. The processor 140 may control the mirror display 110 to display at least one of the control menu or the state information, corresponding to the external apparatus, based on the information on the external apparatus. For example, the processor 140 may control the mirror display 110 to display at least one of the control menu or the state information, corresponding to the external apparatus, based on identify information of the external apparatus in case of identifying that the external apparatus is an apparatus pre-registered in the electronic apparatus 100. For example, the processor 140 may control the mirror display 110 to display at least one of the control menu or the state information, corresponding to the external apparatus, based on identify information of the external apparatus in case of identifying that the external apparatus is an apparatus of a predetermined type. As an example, the processor 140 may transmit a control signal corresponding to the user command to the external apparatus through the communication interface 150 based on the user command received through the control menu.

As an example, the processor 140 may display an application on the mirror display 110 based on information on the application already executed in the external apparatus. However, the processor 140 may display the application on the mirror display 110 based on pre-stored application information. For example, the processor 140 may display a corresponding application icon and/or application execution screen based on a context of the electronic apparatus 100, a user context, or the like. For example, the context of the electronic apparatus 100 may include various information such as current time, weather, lighting, and a content currently provided by the electronic apparatus 100. The user context may include various information such as user clothing, a user gesture, and a user face expression. For example, the electronic apparatus 100 may display an application screen related to going out in case of identifying that the user is about to go out.

As an example, the processor 140 may control the mirror display 110 to display the control menu corresponding to the external apparatus in case of identifying that the external apparatus has a display having a size less than a critical size or has no display based on the information on the external apparatus. For example, the processor 140 may identify whether the external apparatus has the display having the size less than a critical size or has no display based on the type information, model information, or the like of the external apparatus.

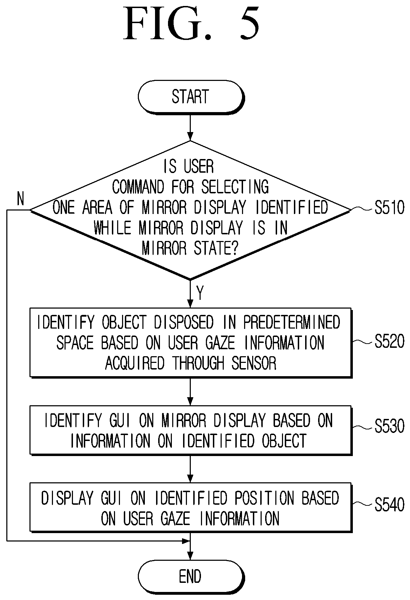

FIG. 5 is a diagram for explaining a control method of an electronic apparatus according to one or more embodiments.

According to an embodiment shown in FIG. 5, the electronic apparatus 100 may identify the object disposed in the predetermined space (S520) based on the user gaze information acquired through the sensor 120 in case of identifying the user command for selecting one area of the mirror display 110 while the mirror display 110 is in the mirror state (S510-Y). For example, the electronic apparatus 100 may identify the user command for selecting one area of the mirror display 110 based on at least one of the user gaze information, the user gesture input, the user touch input, and the proximity communication (for example, the near field communication (NFC)) with the external device.

Next, the electronic apparatus 100 may identify the graphic user interface (GUI) to be displayed on the mirror display 110 (S530) based on the information on the identified object. For example, the electronic apparatus 100 may identify the GUI that includes the information such as the state information, the function information, or the control menu to be displayed on the mirror display 110 based on the information of the identified device such as its type, model, or function.

Next, the electronic apparatus 100 may display the GUI on an identified position of the mirror display 110 based on the user gaze information (S540). For example, the electronic apparatus 100 may identify one position of the mirror display 110 based on the user gaze information and the actual object position in the predetermined space, and display the GUI on the identified position. For example, the electronic apparatus 100 may display the GUI that includes at least one of the state information or the control menu, corresponding to the object, on the identified position.

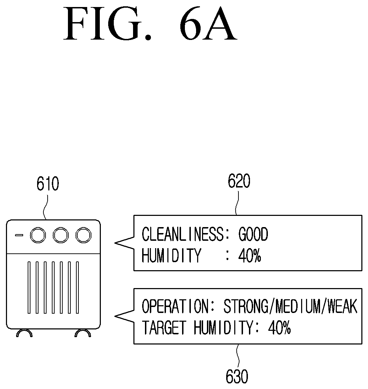

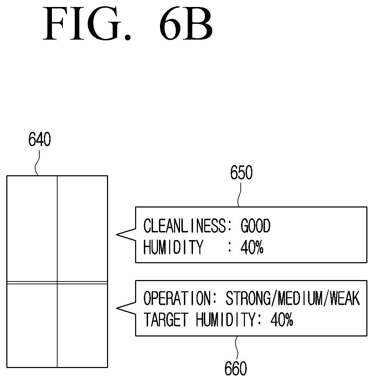

FIGS. 6A and 6B are diagrams for explaining examples of the graphic user interface (GUI) information provided to the mirror display according to one or more embodiments.

As an example, the electronic apparatus 100 may display the GUI information corresponding to the device in one area of the mirror display 110 in case of identifying the object or the device. For example, the electronic apparatus 100 may display the GUI that includes at least one of the state information or the control menu, corresponding to the object, on the identified position. For example, the electronic apparatus 100 may receive the information from the corresponding device, or may receive the information from the server that manages the device.

For example, referring to FIG. 6A, the electronic apparatus 100 may display the identified object, for example, icon 610, state information 620, and control menu 630, corresponding to a humidifier, in one area of the mirror display 110.

For example, referring to FIG. 6B, the electronic apparatus 100 may display the identified object, for example, icon 640, state information 650, and control menu 660, corresponding to the refrigerator, in one area of the mirror display 110.

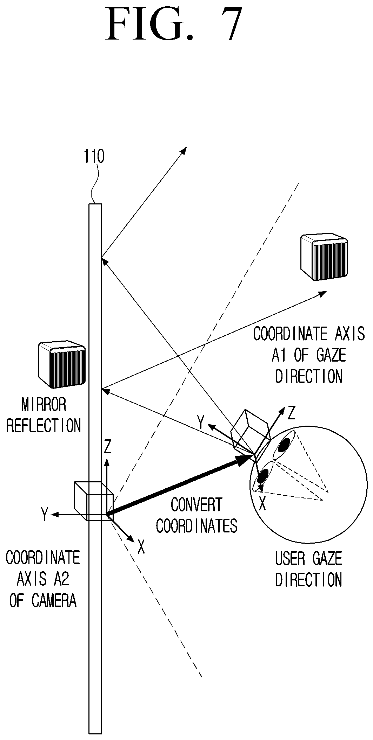

FIGS. 7, 8A, 8B, and 9 are diagrams for explaining a method of identifying a GUI display position according to one or more embodiments.

As an example, the electronic apparatus 100 may identify a position of the mirror display 110 to display the GUI based on the user gaze information and the actual object position in the predetermined space.

For example, referring to FIG. 7, the electronic apparatus 100 may identify a user gaze direction based on the image captured through the camera. The electronic apparatus 100 may convert a coordinate of the user gaze direction based on a coordinate axis A2 of the camera, and identify a user gaze area on the mirror display 110 based on a coordinate axis A1 of the gaze direction.

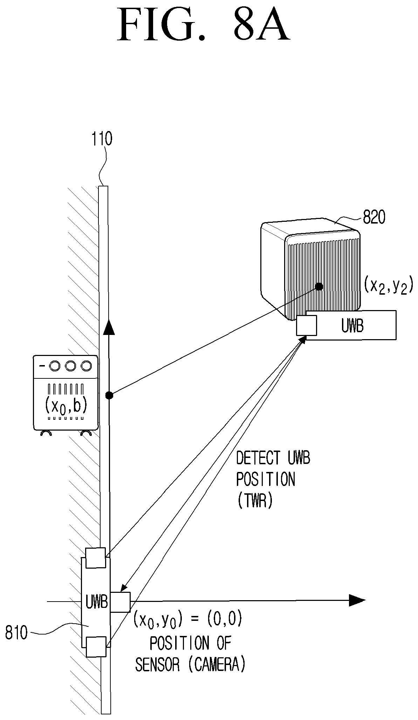

For example, referring to FIG. 8A, the electronic apparatus 100 may transmit a UWB signal at position 810 of the sensor 120 (for example, the camera) that has coordinates $(x_0, y_0) = (0, 0)$ to thus identify an actual object position 820 of coordinates $(x_2, y_2)$. However, the UWB signal may be only an example, and the electronic apparatus 100 may use various communication methods for measuring a distance, such as the Bluetooth communication.

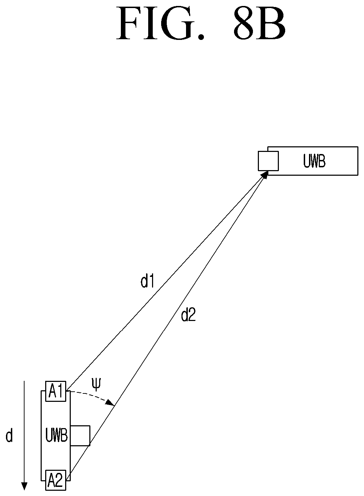

For example, referring to FIG. 8B, the electronic apparatus 100 may calculate d1 and d2 based on a signal ToF received from each of a plurality of antennas A1 and A2 disposed on the sensor 120, and calculate $\sin(\Psi)=a/b$ based on a distance difference a between d1 and d2 and a distance b between the antennas A1 and A2 to thus calculate coordinates $(x2, y2) = (d1^*\cos(\Psi), d1^*\sin(\Psi))$ corresponding to the actual object position.

Next, the electronic apparatus 100 may calculate a GUI display position of $(x0, b)$ as shown in FIG. 8A based on the actual device position and the user gaze direction.

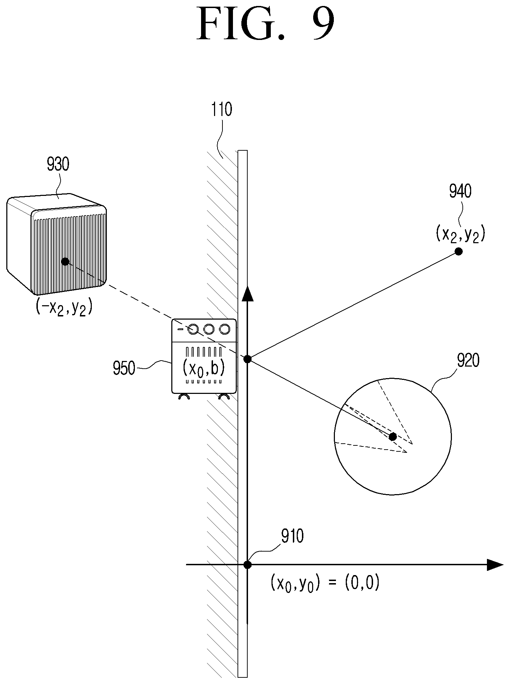

For example, referring to FIG. 9, the electronic apparatus 100 may calculate GUI display position 950 of coordinates $(x_0, b)$ based on user face position 920 of coordinates $(x_1, y_1)$, actual object position 940 of coordinates $(x_2, y_2)$, and virtual object position 930 of coordinates $(-x_2, y_2)$, based on position 910 of the sensor 120 (for example, the camera) that has coordinates $(x_0, y_0) = (0, 0)$. For example, the GUI display position of coordinates $(x_0, b)$ may be calculated as the following equations 1 and 2.

$$[Equation\ 1]$$

$$x_0 = \frac{(y_1-y_2)x+(y_1x_2+y_2x_1)}{x_1+x_2}$$

$$[Equation\ 2]$$

$$b = \frac{y_1x_2+y_2x_1}{x_1+x_2}$$

However, as another example, the electronic apparatus 100 may identify the GUI display position by using an artificial intelligence model. For example, the electronic apparatus 100 may input the user gaze information and the information on the actual object position into the artificial intelligence model to thus acquire the GUI display position on the mirror display 110. For example, the electronic apparatus 100 may input a captured image of the user and the information on the actual object position into the artificial intelligence model to thus acquire the GUI display position on the mirror display 110.

As an example, the artificial intelligence model may be provided through learning. Here, "being provided through learning" indicates that the predefined operation rule or artificial intelligence model of a desired feature is provided by applying a learning algorithm to a large number of learning data. Such learning may be performed by a device itself in which the artificial intelligence is performed according to the present disclosure, or by a separate server/system. The artificial intelligence model may include a plurality of neural network layers. At least one layer has at least one weight value, and an operation of the layer may be performed through an operation result of a previous layer and at least one defined operation. Examples of the neural network may include a convolutional neural network (CNN), a recurrent neural network (RNN), a deep neural network (DNN), a restricted Boltzmann machine (RBM), a deep belief network (DBN), a bidirectional recurrent deep neural network (BRDNN), a deep Q-network, and a transformer. However, the neural network of the present disclosure is not limited to the above examples except for a case where a type of the neural network is specified. The learning algorithm is a method of training a predetermined target device (for example, a robot) by using a large number of learning data for the predetermined target device to make a decision or a prediction for itself. Examples of the learning algorithms may include a supervised learning algorithm, an unsupervised learning algorithm, a semi-supervised learning algorithm, or a reinforcement learning algorithm. However, the learning algorithm of the present disclosure is not limited to the above-described examples, unless specified otherwise.

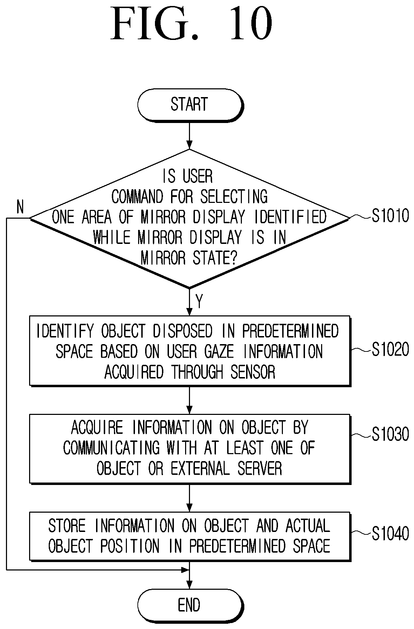

FIG. 10 is a flowchart for explaining a control method of an electronic apparatus according to one or more embodiments.

Referring to FIG. 10, the electronic apparatus 100 may identify the object disposed in the predetermined space (S1020) based on the user gaze information acquired through the sensor 120 in case of identifying the user command for selecting one area of the mirror display 110 while the mirror display 110 is in the mirror state (S1010).

Next, the electronic apparatus 100 may acquire the information on the object by communicating with at least one of the object or the external server (S1030).

The electronic apparatus 100 may then map the information on the object and the actual object position in the predetermined space and store the same (S1040).

As an example, the electronic apparatus 100 may then identify the information on the object based on the pre-registered information in case that the information on the object and the actual object position in the predetermined space are mapped and registered.

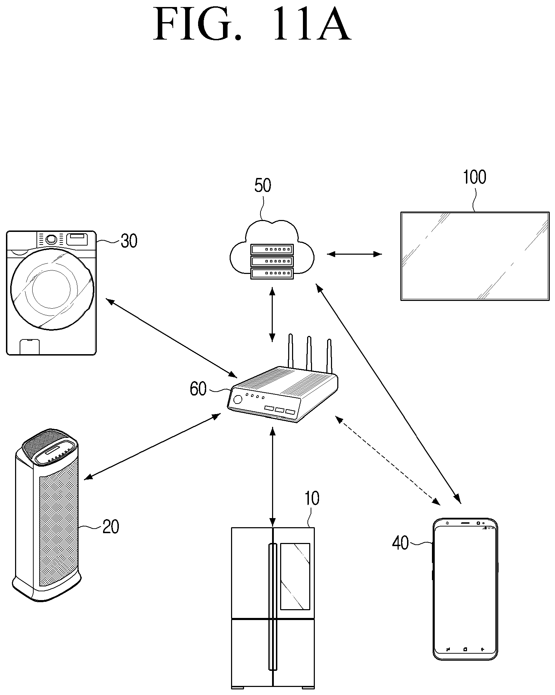

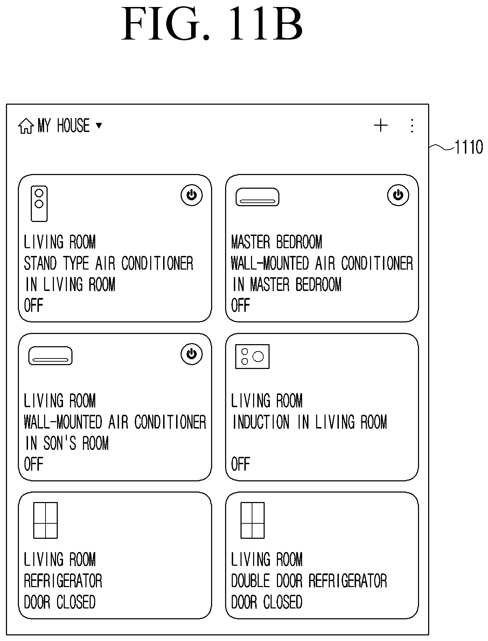

FIGS. 11A and 11B are diagrams for explaining a method of acquiring the information on the object by using the external server according to one or more embodiments.

Referring to FIG. 11A, an electronic system may include a plurality of devices 10, 20, and 30, a user terminal 40, a server 50, and an AP apparatus 60.

The plurality of devices 10, 20, and 30 may be various internet of things (IoT) devices that may be controlled through an application installed on the user terminal 40. For example, the plurality of devices 10, 20, and 30 may be implemented as various home appliance devices such as a television (TV), an air purifier, a washing machine, a refrigerator, a dryer, and an oven. As an example, the plurality of devices 10, 20, and 30 may be internet of things (IoT) apparatus that support a Wi-Fi module.

The user terminal 40 may download and install the application from a server that provides the application. For example, the application may be an IoT application for registering and managing the plurality of devices 10, 20, and 30 in the server 50. The application may be software that the user directly uses on an operating system (OS), and may be provided in the form of an icon interface on a screen of the user terminal 40. In this case, the user may execute the application (hereinafter, referred to as the IoT application) on the user terminal 40, input a user account, and log in to the server 50 through the input user account, and the user terminal 40 may communicate with the server 50 based on the logged-in user account.

The server 50 may manage the plurality of devices 10, 20, and 30 registered to the user account. Here, the server 50 may be implemented as a cloud server, and is not limited thereto.

As an example, in case that the plurality of devices 10, 20, and 30 are registered to the user account, the server 50 may transmit data received from the plurality of devices 10, 20, and 30 to the user terminal 40 communicating with the server 50 based on the user account to which the plurality of devices 10, 20, and 30 are registered. As an example, as shown in FIG. 11B, the server 50 may manage device identification information, a device position, a device state, etc. For example, the device information managed by the server 50 may be provided on the screen as shown in FIG. 11B through the application execution screen on the user terminal 40.

In addition, in case of receiving a control command for the plurality of devices 10, 20, and 30 from the user terminal 40, the server 50 may transmit a control signal corresponding to the received control command to the plurality of devices 10, 20, and 30. In this case, the user terminal 40, implemented as a smartphone, a mobile phone, a tablet PC, a laptop PC, or the like, may access the server 50 through a mobile communication network such as long-term evolution (LTE), or fifth generation (5G), or access the server 50 through the AP apparatus 60 or another AP apparatus, and may transmit the control command for the plurality of devices 10, 20, and 30 to the server 50 through the IoT application installed on the user terminal 40.

As an example, the electronic apparatus 100 may communicate with the server 50 to thus acquire, from the server 50, information on the object, that is, at least one of the plurality of devices 10, 20, or 30. For example, the electronic apparatus 100 may identify the object disposed in the predetermined space based on the user gaze information, and acquire the information on the identified object from the server 50. For example, the electronic apparatus 100 may acquire the information on the object by transmitting, to the server 50, at least one of the identification information or the actual object position, acquired from the object. The electronic apparatus 100 may then map the information on the object and the actual object position in the predetermined space and store the same.

As an example, the electronic apparatus 100 may then identify the information on the object based on the pre-registered information in case that the information on the object and the actual object position in the predetermined space are mapped and registered.

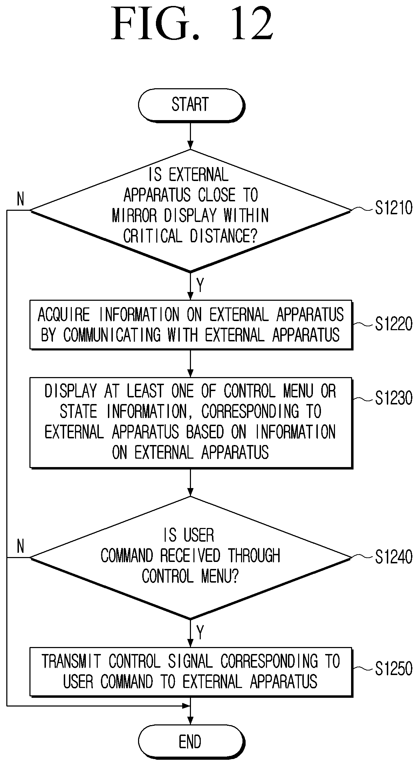

FIG. 12 is a flowchart for explaining a control method of an electronic apparatus according to one or more embodiments.

Referring to FIG. 12, the electronic apparatus 100 may acquire the information on the external apparatus by communicating with the external apparatus (S1220) in case of identifying that the external apparatus is close to the mirror display within the critical distance (S1210).

Next, the electronic apparatus 100 may display at least one of the control menu or the state information, corresponding to the external apparatus based on the information on the external apparatus (S1230).

Next, the electronic apparatus 100 may transmit the control signal corresponding to the user command to the external apparatus (S1250) in case of receiving the user command through the control menu (S1240-Y).

As an example, the electronic apparatus 100 may display the application execution screen on the mirror display 110 based on the information on the application already executed in the external apparatus.

As an example, the electronic apparatus 100 may display the control menu corresponding to the external apparatus in case of identifying that the external apparatus is an apparatus having no display based on the information on the external apparatus.

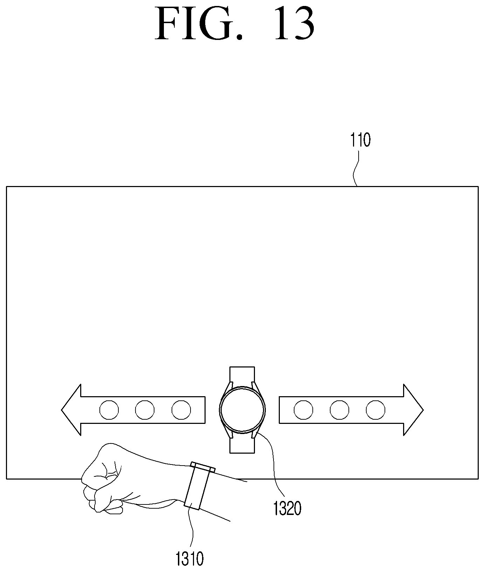

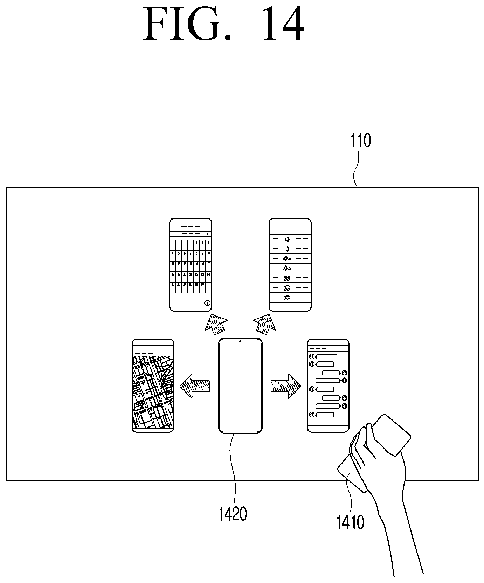

FIGS. 13 and 14 are diagrams for explaining a method of providing the information on the external apparatus close to the mirror display according to one or more embodiments.

Referring to FIG. 13, the electronic apparatus 100 may display a screen 1320 related to a wearable device, for example, the current screen, menu screen, state screen, or the like of the wearable device in case that the wearable device 1310 (for example, a watch device) is close to the mirror display 110 within the critical distance. Alternatively, the electronic apparatus 100 may display a screen of the wearable device corresponding to a selected icon in case that the icon displayed on the mirror display 110 is selected.

As an example, the electronic apparatus 100 may identify an area where the user is reflected in the mirror display 110, and perform an image processing on the area for a user reflection image to be removed. For example, the electronic apparatus 100 may predict a user image to be reflected on the mirror display 110 based on the captured image of the user, and display an opposite pixel value corresponding to the user image to thus perform the image processing on the area for the user reflection image to be removed. For example, the user may select the GUI displayed on the mirror display 110. In this case, the electronic apparatus 100 may identify the selected GUI, and transmit information on the identified GUI to the wearable device, or transmit the control signal corresponding to the identified GUI to the wearable device.

Referring to FIG. 14, the electronic apparatus 100 may display a screen 1420 related to a smartphone, such as a current screen or an application screen, in case that a smartphone 1410 is close to the mirror display 110 within the critical distance.

As an example, the electronic apparatus 100 may display a screen of a recently used application. As another example, the electronic apparatus 100 may provide the corresponding application screen based on the context of the electronic apparatus 100 and/or the user context. For example, the electronic apparatus 100 may provide the application screen related to going out in case of identifying that the user is about to go out based on the captured image of the user. For example, the user may select the GUI displayed on the mirror display 110. In this case, the electronic apparatus 100 may identify the selected GUI, transmit the information on the identified GUI to the smartphone, or transmit the control signal corresponding to the identified GUI to the smartphone.

According to the various embodiments described above, accessibility to a remote object may be improved through the actual/virtual conversion of the object reflected on the mirror display.

In addition, the methods according to the various embodiments of the present disclosure described above may be implemented only by software upgrade or hardware upgrade of the conventional electronic apparatus.

In addition, the various embodiments of the present disclosure described above may be performed through an embedded server disposed in the electronic apparatus, or a server disposed outside the electronic apparatus.

Meanwhile, according to an embodiment of the present disclosure, the various embodiments described above may be implemented in software including an instruction stored in a machine-readable storage medium (for example, a computer-readable storage medium). A machine may be an apparatus that invokes the stored instruction from the storage medium, may be operated based on the invoked instruction, and may include the electronic apparatus (e.g., electronic apparatus A) according to the disclosed embodiments. In case that the instruction is executed by the processor, the processor may perform a function corresponding to the instruction directly or by using other components under control of the processor. The instruction may include a code provided or executed by a compiler or an interpreter. The machine-readable storage medium may be provided in the form of a non-transitory storage medium. Here, a term "non-transitory" may only indicate that the storage medium is tangible without including a signal, and does not distinguish whether data are semi-permanently or temporarily stored in the storage medium.

In addition, according to an embodiment of the present disclosure, the methods in the various embodiments described above may be provided by being included in a computer program product. The computer program product may be traded as a product between a seller and a purchaser. The computer program product may be distributed in a form of the machine-readable storage medium (for example, a compact disc read only memory (CD-ROM)), or may be distributed online through an application store (for example, PlayStore™). In case of the online distribution, at least some of the computer program products may be at least temporarily stored in a storage medium such as a memory of a server of a manufacturer, a server of an application store, or a relay server, or be temporarily generated.

In addition, each of the components (for example, modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

**Claims**

1. An electronic apparatus comprising:

   a mirror display;
   a sensor; and
   at least one processor configured to:

   identify a user command for selecting an area of the mirror display,
   acquire user gaze information through the sensor,
   identify an object in a predetermined space and reflected in the selected area of the mirror display based on the acquired user gaze information,
   identify a graphic user interface (GUI) to be displayed on the mirror display based on information on the identified object,
   identify a position on the mirror display to display the identified GUI based on the user gaze information, and
   control the mirror display to display the identified GUI on the identified position.

2. The apparatus as claimed in claim 1, wherein the at least one processor is configured to:
   identify the user command for selecting the area of the mirror display based on at least one of the user gaze information, a user gesture input, or a user touch input.

3. The apparatus as claimed in claim 1, wherein the at least one processor is configured to:
   identify the position on the mirror display to display the identified GUI based on the user gaze information and an actual position of the identified object in the predetermined space.

4. The apparatus as claimed in claim 3, further comprising:

   a communication interface,
   wherein the at least one processor is configured to:

   identify a direction of the identified object on a basis of the mirror display based on the user gaze information, and
   identify the actual position of the identified object in the predetermined space by transmitting an ultra-wideband (UWB) signal through the communication interface based on the identified direction of the identified object.

5. The apparatus as claimed in claim 1, wherein the at least one processor is configured to:

   acquire the information on the identified object by communicating with at least one of the identified object or an external server, and
   store the acquired information on the identified object and an actual position of the identified object in the predetermined space in a memory.

6. The apparatus as claimed in claim 1, wherein the at least one processor is configured to:

   control the mirror display to display the identified GUI related to a function of the identified object based on the information on the identified object, and
   control an operation of the identified object based on a user manipulation on the displayed identified GUI.

7. The apparatus as claimed in claim 1, further comprising:

   a communication interface,
   wherein the at least one processor is configured to:

   communicate with an external apparatus through the communication interface and acquire information on the external apparatus when the external apparatus is close to the mirror display within a critical distance, and
   control the mirror display to display at least one of a control menu or state information, corresponding to the external apparatus, based on the acquired information on the external apparatus.

8. The apparatus as claimed in claim 7, wherein the at least one processor is configured to:
   transmit a control signal corresponding to the user command to the external apparatus through the communication interface based on a user command received through the control menu.

9. The apparatus as claimed in claim 7, wherein

   the acquired information on the external apparatus includes information on an application already executed in the external apparatus, and
   the at least one processor is configured to:
   display an application execution screen on the mirror display based on the information on the application.

10. The apparatus as claimed in claim 7, wherein the at least one processor is configured to:
    control the mirror display to display the control menu corresponding to the external apparatus when the external apparatus is identified as having no display based on the information on the external apparatus.

11. A method of controlling an electronic apparatus including a mirror display and a sensor, the method comprising:

identifying a user command for selecting an area of the mirror display;

acquiring user gaze information through the sensor;

identifying an object in a predetermined space and reflected in the selected area of the mirror display based on the acquired user gaze information;

identifying a graphic user interface (GUI) to be displayed on the mirror display based on information on the identified object;

identifying a position on the mirror display to display the identified GUI based on the user gaze information; and

controlling the mirror display to display the identified GUI on the identified position.

12. The method as claimed in claim 11, wherein the identifying the the user command for selecting the area of the mirror display is based on at least one of the user gaze information, a user gesture input, or a user touch input.

13. The method as claimed in claim 11, wherein the position on the mirror display to display the identified GUI is identified based on the user gaze information and an actual position of the identified object in the predetermined space.

14. The method as claimed in claim 13, wherein the identifying the position on the mirror display to display the identified GUI includes:

identifying a direction of the identified object on a basis of the mirror display based on the user gaze information, and

identifying the actual position of the identified object in the predetermined space by transmitting an ultra-wideband (UWB) signal based on the identified direction of the identified object.

15. A non-transitory computer-readable medium which stores a computer instruction for causing an electronic apparatus including a mirror display and a sensor to perform an operation when executed by a processor of the electronic apparatus, wherein the operation includes:

identifying a user command for selecting an area of the mirror display;

acquiring user gaze information through the sensor;

identifying an object in a predetermined space and reflected in the selected area of the mirror display based on the acquired user gaze information;

identifying a graphic user interface (GUI) to be displayed on the mirror display based on information on the identified object;

identifying a position on the mirror display to display the identified GUI based on the user gaze information; and

controlling the mirror display to display the identified GUI on the identified position.

# FIG. 1

# FIG. 2

100

| 110 | 140 | 120 |
|---|---|---|
| MIRROR DISPLAY | AT LEAST ONE PROCESSOR | SENSOR |

130

MEMORY

# FIG. 3A

# FIG. 3B

# FIG. 4

<u>100'</u>

110 — MIRROR DISPLAY

120 — SENSOR

130 — MEMORY

140 — AT LEAST ONE PROCESSOR

150 — COMMUNICATION INTERFACE

160 — USER INTERFACE

170 — SPEAKER

# FIG. 5

START

IS USER
COMMAND FOR SELECTING
ONE AREA OF MIRROR DISPLAY IDENTIFIED
WHILE MIRROR DISPLAY IS IN
MIRROR STATE?

N

Y

~S510

IDENTIFY OBJECT DISPOSED IN PREDETERMINED
SPACE BASED ON USER GAZE INFORMATION
ACQUIRED THROUGH SENSOR

~S520

IDENTIFY GUI ON MIRROR DISPLAY BASED ON
INFORMATION ON IDENTIFIED OBJECT

~S530

DISPLAY GUI ON IDENTIFIED POSITION BASED
ON USER GAZE INFORMATION

~S540

END

# FIG. 6A

610

620

CLEANLINESS: GOOD
HUMIDITY    : 40%

OPERATION: STRONG/MEDIUM/WEAK
TARGET HUMIDITY: 40%

630

# FIG. 6B

640

650

CLEANLINESS: GOOD
HUMIDITY    : 40%

OPERATION: STRONG/MEDIUM/WEAK
TARGET HUMIDITY: 40%

660

# FIG. 7

COORDINATE AXIS
A1 OF GAZE
DIRECTION

MIRROR
REFLECTION

CONVERT
COORDINATES

COORDINATE
AXIS A2
OF CAMERA

USER GAZE
DIRECTION

# FIG. 8A

110

820

$(x_2, y_2)$

UWB

$(x_0, b)$

DETECT UWB
POSITION
(TWR)

UWB

$(x_0, y_0) = (0,0)$
POSITION OF
SENSOR (CAMERA)

810

# FIG. 8B

# FIG. 9

# FIG. 10

```
                        ┌──────────┐
                        │  START   │
                        └──────────┘
                              │
                              ▼
                     ╱────────────────╲
                    ╱     IS USER       ╲
           N    ╱   COMMAND FOR SELECTING ╲
        ◄──────── ONE AREA OF MIRROR DISPLAY IDENTIFIED ├──S1010
                 ╲  WHILE MIRROR DISPLAY IS IN  ╱
                  ╲      MIRROR STATE?     ╱
                   ╲────────────────╱
                         │ Y
                         ▼
        ┌────────────────────────────────────┐
        │ IDENTIFY OBJECT DISPOSED IN PREDETERMINED │
        │ SPACE BASED ON USER GAZE INFORMATION      ├──S1020
        │ ACQUIRED THROUGH SENSOR                   │
        └────────────────────────────────────┘
                         │
                         ▼
        ┌────────────────────────────────────┐
        │ ACQUIRE INFORMATION ON OBJECT BY          │
        │ COMMUNICATING WITH AT LEAST ONE OF        ├──S1030
        │ OBJECT OR EXTERNAL SERVER                 │
        └────────────────────────────────────┘
                         │
                         ▼
        ┌────────────────────────────────────┐
        │ STORE INFORMATION ON OBJECT AND ACTUAL    ├──S1040
        │ OBJECT POSITION IN PREDETERMINED SPACE    │
        └────────────────────────────────────┘
                         │
                         ▼
                   ┌──────────┐
                   │   END    │
                   └──────────┘
```

# FIG. 11A

# FIG. 11B

~1110

⌂ MY HOUSE ▾     +  ⋮

LIVING ROOM
STAND TYPE AIR CONDITIONER
IN LIVING ROOM
OFF

MASTER BEDROOM
WALL-MOUNTED AIR CONDITIONER
IN MASTER BEDROOM
OFF

LIVING ROOM
WALL-MOUNTED AIR CONDITIONER
IN SON'S ROOM
OFF

LIVING ROOM
INDUCTION IN LIVING ROOM

OFF

LIVING ROOM
REFRIGERATOR
DOOR CLOSED

LIVING ROOM
DOUBLE DOOR REFRIGERATOR
DOOR CLOSED

# FIG. 12

START

IS EXTERNAL APPARATUS CLOSE TO MIRROR DISPLAY WITHIN CRITICAL DISTANCE? — S1210

N

Y

ACQUIRE INFORMATION ON EXTERNAL APPARATUS BY COMMUNICATING WITH EXTERNAL APPARATUS — S1220

DISPLAY AT LEAST ONE OF CONTROL MENU OR STATE INFORMATION, CORRESPONDING TO EXTERNAL APPARATUS BASED ON INFORMATION ON EXTERNAL APPARATUS — S1230

IS USER COMMAND RECEIVED THROUGH CONTROL MENU? — S1240

N

Y

TRANSMIT CONTROL SIGNAL CORRESPONDING TO USER COMMAND TO EXTERNAL APPARATUS — S1250

END

# FIG. 13

# FIG. 14

## INTERNATIONAL SEARCH REPORT

| | International application No. |
|---|---|
| | **PCT/KR2024/010843** |

| A. | CLASSIFICATION OF SUBJECT MATTER |
|---|---|

**G06F 3/14**(2006.01)i; **G06F 3/01**(2006.01)i; **G06F 3/041**(2006.01)i; **G06F 9/451**(2018.01)i; **H04W 4/80**(2018.01)i

According to International Patent Classification (IPC) or to both national classification and IPC

| B. | FIELDS SEARCHED |
|---|---|

Minimum documentation searched (classification system followed by classification symbols)

G06F 3/14(2006.01); G06F 3/048(2006.01); G06F 3/0484(2013.01); G06K 9/00(2006.01); G09G 5/00(2006.01); H04N 21/2343(2011.01); H04N 21/4402(2011.01); H04N 7/15(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 미러 디스플레이(mirror display), 센서(sensor), 시선 추적(eye tracking), 객체(object), GUI(Graphic User Interface), 미러링(mirroring)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-1894793 B1 (SK TELECOM CO., LTD.) 04 September 2018 (2018-09-04) See paragraphs [0018], [0021], [0023], [0032], [0036]-[0037], [0043] and [0045]; and claim 1. | 1-5,11-15 |
| Y | | 6-10 |
| Y | KR 10-2264806 B1 (SAMSUNG ELECTRONICS CO., LTD.) 14 June 2021 (2021-06-14) See paragraphs [0094]-[0097]; and figures 7 and 10-14. | 6-10 |
| A | KR 10-2018-0017638 A (LG ELECTRONICS INC.) 21 February 2018 (2018-02-21) See paragraphs [0105]-[0108], [0111], [0162]-[0163] and [0227]-[0229]; and figures 32-38. | 1-15 |
| A | KR 10-2017-0060353 A (SAMSUNG ELECTRONICS CO., LTD.) 01 June 2017 (2017-06-01) See paragraphs [0048]-[0050]; and figure 1. | 1-15 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 November 2024** | **08 November 2024** |

| Name and mailing address of the ISA/KR | Authorized officer |
|---|---|
| **Korean Intellectual Property Office** **Government Complex-Daejeon Building 4, 189 Cheongsaro, Seo-gu, Daejeon 35208** | |
| Facsimile No. **+82-42-481-8578** | Telephone No. |

Form PCT/ISA/210 (second sheet) (July 2022)

# EP 4 708 021 A1

## INTERNATIONAL SEARCH REPORT

International application No.

**PCT/KR2024/010843**

### C.    DOCUMENTS CONSIDERED TO BE RELEVANT

| Category* | Citation of document, with indication, where appropriate, of the relevant passages | Relevant to claim No. |
|---|---|---|
| A | KR 10-2382362 B1 (MICROSOFT TECHNOLOGY LICENSING, LLC) 08 April 2022 (2022-04-08) See claim 1. | 1-15 |

Form PCT/ISA/210 (second sheet) (July 2022)

**EP 4 708 021 A1**

**INTERNATIONAL SEARCH REPORT**
**Information on patent family members**

International application No.

**PCT/KR2024/010843**

| Patent document cited in search report | | | Publication date (day/month/year) | Patent family member(s) | | | Publication date (day/month/year) |
|---|---|---|---|---|---|---|---|
| KR | 10-1894793 | B1 | 04 September 2018 | KR | 10-2018-0100090 | A | 07 September 2018 |
| KR | 10-2264806 | B1 | 14 June 2021 | US | 2016-0239250 | A1 | 18 August 2016 |
| | | | | US | 9916120 | B2 | 13 March 2018 |
| KR | 10-2018-0017638 | A | 21 February 2018 | | None | | |
| KR | 10-2017-0060353 | A | 01 June 2017 | CN | 108352145 | A | 31 July 2018 |
| | | | | EP | 3314376 | A1 | 02 May 2018 |
| | | | | US | 10223956 | B2 | 05 March 2019 |
| | | | | US | 2017-0148376 | A1 | 25 May 2017 |
| | | | | WO | 2017-090960 | A1 | 01 June 2017 |
| KR | 10-2382362 | B1 | 08 April 2022 | CN | 105075246 | A | 18 November 2015 |
| | | | | CN | 105075246 | B | 03 April 2018 |
| | | | | EP | 2959678 | A1 | 30 December 2015 |
| | | | | EP | 2959678 | B1 | 23 December 2020 |
| | | | | JP | 2016-515325 | A | 26 May 2016 |
| | | | | JP | 6377082 | B2 | 22 August 2018 |
| | | | | KR | 10-2015-0120427 | A | 27 October 2015 |
| | | | | KR | 10-2022-0044622 | A | 08 April 2022 |
| | | | | KR | 10-2240812 | B1 | 14 April 2021 |
| | | | | KR | 10-2495447 | B1 | 06 February 2023 |
| | | | | US | 10044982 | B2 | 07 August 2018 |
| | | | | US | 2014-0232816 | A1 | 21 August 2014 |
| | | | | US | 2016-0205353 | A1 | 14 July 2016 |
| | | | | US | 2017-0201722 | A1 | 13 July 2017 |
| | | | | US | 9325943 | B2 | 26 April 2016 |
| | | | | US | 9641805 | B2 | 02 May 2017 |
| | | | | WO | 2014-130378 | A1 | 28 August 2014 |

Form PCT/ISA/210 (patent family annex) (July 2022)